## Europäisches Patentamt
## European Patent Office
## Office européen des brevets

(19)

(11) Publication number: **0 128 850**
**B1**

(12)

# EUROPEAN PATENT SPECIFICATION

(45) Date of publication of patent specification: **07.12.88**

(21) Application number: **84630069.7**

(22) Date of filing: **27.04.84**

(51) Int. Cl.⁴: **F 02 C 7/28, F 01 D 3/00, F 01 D 11/00, F 01 D 25/12, F 01 D 25/16, F 04 D 29/04**

(54) **Thrust balancing and cooling system.**

(30) Priority: **31.05.83 US 499630**

(43) Date of publication of application:
**19.12.84 Bulletin 84/51**

(45) Publication of the grant of the patent:
**07.12.88 Bulletin 88/49**

(84) Designated Contracting States:
**DE FR GB**

(56) References cited:
**DE-B- 135 598**
**DE-C-1 080 352**
**GB-A- 826 508**
**GB-A-1 129 937**
**US-A-2 749 087**
**US-A-3 382 670**
**US-A-3 505 813**

(73) Proprietor: **UNITED TECHNOLOGIES CORPORATION**
**United Technologies Building 1, Financial Plaza**
**Hartford, CT 06101 (US)**

(72) Inventor: **Brodell, Robert F.**
**15 Walker Lane**
**Marlborough Connecticut 06447 (US)**
Inventor: **Laurello, Vincent P.**
**659 Hungry Hill Circle**
**Guilford Connecticut 06437 (US)**

(74) Representative: **Weydert, Robert et al**
**OFFICE DENNEMEYER S.à.r.l. P.O. Box 1502**
**L-1015 Luxembourg (LU)**

Courier Press, Leamington Spa, England.

## Description

This invention relates to gas turbine type power plants for powering aircraft and particularly to thrust balancing of the thrust loads on the internal components of the engine and concomitantly cooling of the bearing compartment and turbine.

In current gas turbine engines of the twin spool type the leakage of high pressure compressor discharge air through the labyrinth seal carried between the high pressure compressor rear rotor shaft and diffuser case typically establishes the thrust loads on the component parts such as the thrust bearing. This air is also used downstream in the engine for cooling purposes, particularly, the bearing compartment and the high pressure turbine. In these heretofore designed engine models, the thrust balance is dictated by the diameter of this seal and/or pressures and once the balance is set for a given operating point, it cannot be varied for any other. Hence, the balance point is selected for a predetermined mode of engine operation, and it is a compromised value, as it will vary with all other operating modes. Hence, on many engines it is difficult, if not impossible to provide the desired thrust load at both the sea level take-off condition and also, the cruise condition.

Inasmuch as the temperature surrounding the bearing compartment is dictated by this discharge air, on certain engine designs, particularly those comtemplated for the future, this temperature is unacceptably high. Obviously, since the temperature of this air is higher than the temperature of the air of heretofore known engines, its use for cooling of the high pressure turbine is less than desirable, and when such is used, considerably more flow is required, resulting in a higher thrust specific fuel consumption.

A turbine engine according to the precharacterizing portion of claim 1 is disclosed in US-A-3 382 670 wherein one cavity supplied with compressor bleed air surrounds the bearing compartment and another cavity surrounding the first cavity is vented continuously to a low pressure area. A labyrinth type seal is provided to seal the second cavity with respect to the high pressure compressor discharge air.

The object of the invention is to provide an improved thrust balance system for a gas turbine engine.

This is achieved by the features recited in the characterizing portion of claim 1.

The pair of seals fore and aft of the bearing compartment isolate this area and permit the independent control of the atmosphere surrounding this compartment when the compressor leakage air is bleed from the first cavity for thrust balancing purposes.

A controllable valve or orifice adapted to bleed compressor discharge air from the first cavity immediately upstream of the fore seal mentioned above serves to control the pressure drop across thrust balance seal so as to effectuate a desired thrust load during a given operating condition of the engine.

The air bled from this cavity, ahead of the fore seal being at a compatible temperature and pressure is routed externally to the high pressure turbine static structure for cooling purposes.

Cooler air, air that is cooler than the environment surrounding the bearing compartment, is fed into this environment between the fore and aft seals, is bled from the mid-stage compressor either through an anti-vortex tube directing the compressor bleed air radially inward to the engine's shaft where it flows axially to the environment surrounding the mid-frame bearing compartment, or externally from the mid high pressure compressor case thru the diffuser case to the bearing compartment, this air then is used to supply cooling air to portions of the high pressure turbine rotor.

By virtue of this invention we are able to provide and maintain a cooler atmosphere surrounding this bearing compartment and supply cooler air to the high pressure turbine rotor while modulating thrust balance.

The external valve controlling the leakage flow of the thrust balance seal upstream of the fore seal, serves to modulate the thrust balance.

We have also found, with the additional seals in engines that employ turbine on board injectors (TOBI) we can increase the TOBI discharge pressure with a minimal impact on thrust balance and leakage.

Other features and advantages will be apparent from the specification and claims and from the accompanying drawings which illustrate an embodiment of the invention.

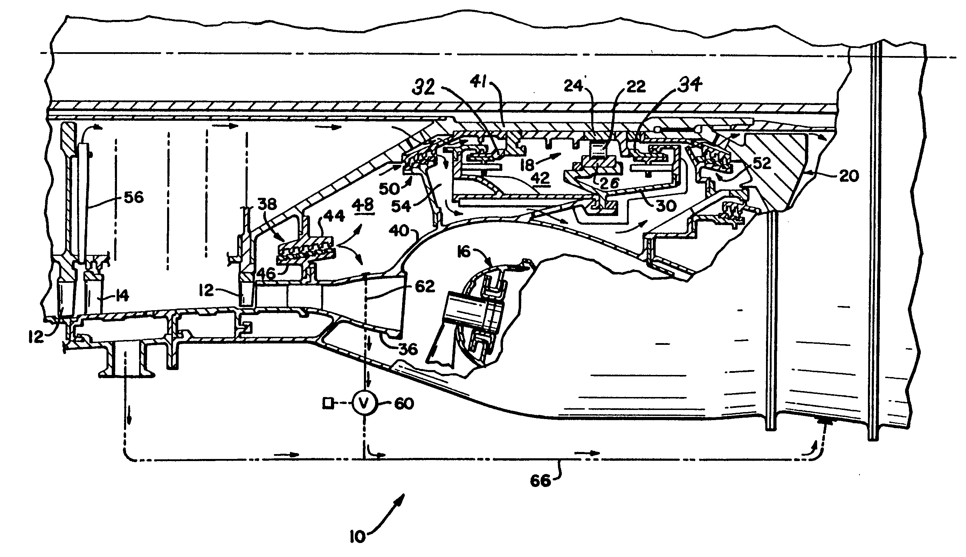

In the drawing:

The sole figure is a fragmentary view of a turbine type power plant, partly in section and partly in schematic illustrating the details of this invention.

For the sake of simplicity and convenience only that portion of the gas turbine engine that is necessary for an understanding of this invention is disclosed. For further details of a suitable engine reference should be made to the JT-9D engine model manufactured by Pratt & Whitney Aircraft, a division of United Technologies Corporation. Suffice it to say that the engine of the preferred embodiment is a twin spool axial compressor flow type. In this embodiment only the high pressure spool or gas generator, i.e. a portion of the high pressure compressor, a portion of the high pressure turbine, and the burner section and the mid-bearing is shown. However, it is to be understood as one skilled in the art will recognize that this invention has utility in other types of engines, particularly where it is desirable to modulate the thrust balance and/or cool the bearing compartment.

Referring now to the sole Fig., the engine generally indicated by reference numeral 10 comprises a compressor section having a plurality of axial compressor stages, consisting of compressor blades 12 and stator 14, a burner 16, bearing 18, and high pressure turbine 20. Bearing 18, consisting of rollers 22, inner race 24, and outer race 26 supports shaft 41 that carries the compressor stages and turbine 20 in a conventional manner. The bearing 18 is housed in case 30, that encapsulates the bearing and defines the bearing compartment 42. The ends of the compartment 42 are sealed by carbon seals 32 and 34 which serve to prevent the oil used for lubrication and cooling from escaping.

A portion of the air discharging from the compressor is diffused through the diffuser 36 which feeds the burner 16 an a portion leaks through the thrust balancing seal 38, into a cavity 48 formed between the high pressure compressor rear shaft 41 and the diffuser case 40. This seal is a well known labyrinth type where the toothed portion 44 is connected to the rotating shaft 41 that bears against the fixed land 46.

An additional seal 50, preferably labyrinth, similar to the labyrinth used for thrust balance is disposed between the thrust balance seal 38 and bearing compartment 42. A further seal 52 is disposed between the high pressure turbine 20 and bearing compartment 42 which serves to isolate the cavity 54 between these two seals and the inner burner case.

As is apparent from the foregoing the cavity 54 between the seals 50 and 52 provide an isolated controllable environment surrounding the bearing compartment 42. The atmosphere which heretofore is conventionally subjected to compressor discharge pressure is now subjected to the cooler midstage compressor air. As shown, this air is fed from the mid-stage compressor through the anti-vortex tube 56, which directs compressor air from this stage radially inwardly toward the engine's shaft where it flows axially to the cavity 54 to surround the bearing compartment. Alternatively, this air can be bled from the compressor outer wall and admitted to cavity 54 through external plumbing (not shown).

To modulate the thrust balance during certain engine operating conditions, say take-off where the thrust and hence flow through the engine is at its highest value, the valve 60 located externally of the engine case, is positioned from a closed to opened condition to bleed thrust seal 38 leakage air from cavity 48 through line 62 and hence change the pressure drop across the seal to effectuate a change in the pressure loading on the component parts. This serves to maintain the desired thrust load during this engine operating mode. Upon a reduction of engine power, say in the cruise condition, the valve 60 is actuated by the actuator schematically shown to the closed position.

Since the air is at a cooler temperature than the turbine environment and is at a pressure compatible with the pressure at the turbine, valve 60 serves to direct the thrust seal leakage flow to the turbine air cooling flow through line 66. Hence, the leakage flow mixes with the cooling air to augment the cooling capacity during the operating regime when valve 60 is opened.

## Claims

1. A gas turbine engine having a compressor and a turbine interconnected by a shaft (41), a burner section having a burner (16) between said compressor and said turbine, stationary engine structure including an inner case (40) radially between the burner (16) and the shaft (41), bearing means (18) supporting said shaft (41), a compartment (42) enclosing said bearing means (18), characterised by a thrust balance seal (38) mounted between said shaft (41) and said stationary engine structure and a pair of axially spaced seal means (50, 52) disposed downstream of said thrust balance seal (38), said seals (38, 50 ,52) between them limiting axially both a generally closed first cavity (48) disposed radially between the inner case (40) and said shaft (41) and a second generally closed cavity (54) downstream of the first cavity and surrounding said bearing compartment (42), said first cavity (48) being adapted to receive compressor leakage air therein through said thrust balance seal (38), by means for admitting cooling air from said compressor into said second cavity (54), and by means for selectively bleeding the compressor leakage air from said first cavity (48) to modulate the thrust balance for given operating conditions of the engine.

2. Gas turbine engine according to claim 1, characterized in that said compressor is a multistage compressor and said cooling air is bled from a mid-stage of said compressor.

3. Gas turbine engine according to claim 1, characterized by means directing mid-stage compressor bleed air as cooling air from said second cavity (54) to the turbine.

4. Gas turbine engine according to claim 1, characterized by additional means bleeding air from said compressor for cooling the turbine and means for mixing said compressor leakage air bled from said first cavity (48) with said cooling air from said compressor for cooling said turbine.

5. Gas turbine engine according to claim 2, characterized by an anti-vortex tube (56) for feeding air from said mid-stage of the compressor toward the axis of rotation thereof.

6. Gas turbine engine according to claim 1, characterized in that said seal means (38, 50, 52) include labyrinth seals.

7. Gas turbine engine according to claim 1, characterized in that the means for selectively bleeding compressor leakage air from the first cavity (48) includes a valve (60) and actuating means for opening and closing said valve (60).

8. Gas turbine engine according to anyone of claims 1 to 7, characterized in that the engine is of the twin spool type having a high pressure compressor and turbine spool and a low pressure compressor and turbine spool, and that said shaft (41) is the high pressure compressor shaft.

## Patentansprüche

1. Gasturbinentriebwerk mit einem Verdichter und einer Turbine, die durch eine Welle (41) miteinander verbunden sind, einem Brennerabschnitt, der einen Brenner (16) hat, zwischen dem Verdichter und der Turbine, einem stationären Triebwerksgebilde, welches ein inneres Gehäuse (40) radial zwischen dem Brenner (16) und der Welle (41) aufweist, einer Lagereinrichtung (18), welche die Welle (41) trägt, einer Kammer (42), welche die Lagereinrichtung (18) umschließt, gekennzeichnet durch eine Schubausgleichsdichtung (38), die zwischen der Welle (41) und dem stationären Triebwerksgebilde befestigt ist, und zwei axialen Abstand aufweisende Dichteinrichtungen (50, 52), die stromabwärts der Schubausgleichsdichtung (38) angeordnet sind, wobei die Dichtungen (38, 50, 52) zwischen sich sowohl einen insgesamt geschlossenen ersten Hohlraum (48), der radial zwischen dem inneren Gehäuse (40) und der Welle (41) angeordnet ist, als auch einen zweiten insgesamt geschlossenen Hohlraum (54) axial begrenzen, der stromabwärts des ersten Hohlraums angeordnet ist und die Lagerkammer (42) umgibt, wobei der erste Hohlraum (48) in er Lage ist, Verdichterleckluft über die Schubausgleichsdichtung (38) aufzunehmen, durch eine Einrichtung zum Einlassen von Kühlluft aus dem Verdichter in den zweiten Hohlraum (54) und durch eine Einrichtung zum wahlweisen Abzapfen der Verdichterleckluft aus dem ersten Hohlraum (48) zum Beeinflussen des Schubausgleichs bei bestimmten Betriebsbedingungen des Triebwerks.

2. Gasturbinentriebwerk nach Anspruch 1, dadurch gekennzeichnet, daß der Verdichter ein mehrstufiger Verdichter ist und daß die Kühlluft aus einer Mittelstufe des Verdichters abgezapft wird.

3. Gasturbinentriebwerk nach Anspruch 1, gekennzeichnet durch eine Einrichtung, die Mittelstufenverdichterabzapfluft als Kühlluft aus dem zweiten Hohlraum (54) zu der Turbine leitet.

4. Gasturbinentriebwerk nach Anspruch 1, gekennzeichnet durch eine zusätzliche Einrichtung zum Abzapfen von Luft aus dem Verdichter zum Kühlen der Turbine und durch eine Einrichtung zum Vermischen der aus dem ersten Hohlraum (48) abgezapften Verdichterleckluft mit der Kühlluft aus dem Verdichter zum Kühlen der Turbine.

5. Gasturbinentriebwerk nach Anspruch 2, gekennzeichnet durch ein Wirbel verhinderndes Rohr (56) zur Luftzufuhr von der Mittelstufe des Verdichters zu der Drehachse desselben.

6. Gasturbinentriebwerk nach Anspruch 1, dadurch gekennzeichnet, daß die Dichteinrichtungen (38, 50, 52) Labyrinthdichtungen aufweisen.

7. Gasturbinentriebwerk nach Anspruch 1, dadurch gekennzeichnet, daß die Einrichtung zum wahlweisen Abzapfen von Verdichterleckluft aus dem ersten Hohlraum (48) ein Ventil (60) und eine Betätigungseinrichtung zum Öffnen und Schließen des Ventils (60) aufweist.

8. Gasturbinentriebwerk nach einem der Ansprüche 1 bis 7, dadurch gekennzeichnet, daß das Triebwerk ein Zweiwellentriebwerk ist, das einen Hochdruckverdichter- und -turbinenläufer und einen Niederdruckverdichter- und -turbinenläufer hat, und daß die Welle (41) die Hochdruckverdichterwelle ist.

**Revendications**

1. Moteur à turbine à gaz comportant un compresseur et une turbine accouplés par un arbre (41), une section de combustion comportant une chambre de combustion (16) entre le compresseur et la turbine, une structure de moteur fixe comportant un carter interne (40) disposé radialement entre la chambre de combustion (16) et l'arbre (41), un palier (18) supportant l'arbre (41), un compartiment (42) enfermant le palier (18), caractérisé en ce qu'il comprend un joint d'étanchéité (38) d'équilibre de la poussée monté entre l'arbre (41) et la structure fixe du moteur et une paire de joints d'étanchéité (50, 52) espacés axialement l'un de l'autre, disposés en aval du joint d'équilibre de la poussée (38), ces joints d'étanchéité (38, 50, 52) délimitant axialement entre eux à la fois une première cavité (48), fermée d'une manière générale, qui est disposée radialement entre le carter interne (40) et l'arbre (41), et une seconde cavité (54) fermée d'une manière générale, se trouvant en aval de la première cavité et entourant le compartiment du palier (42), la première cavité (48) étant adaptée de manière à recevoir, à l'intérieur, de l'air de fuite du compresseur, à travers le joint d'étanchéité (38) d'équilibre de la poussée, des moyens pour admettre, dans la seconde cavité (54), de l'air de refroidissement provenant du compresseur, et des moyens pour soutirer sélectivement de l'air de fuite du compresseur à partir de la première cavité (48), afin de moduler l'équilibre de la poussée dans des conditions de fonctionnement données du moteur.

2. Moteur à turbine à gaz suivant la revendication 1 caractérisé en ce que compresseur est un compresseur à plusieurs étages et l'air de refroidissement est soutiré à partir d'un étage médian du compresseur.

3. Moteur à turbine à gaz suivant la revendication 1 caractérisé en ce qu'il comporte des moyens dirigeant l'air soutiré à partir de l'étage médian du compresseur, en tant qu'air de refroidissement, à partir de la seconde cavité (54), vers la turbine.

4. Moteur à turbine à gaz suivant la revendication 1 caractérisé en ce qu'il comporte des moyens additionnels soutirant de l'air à partir du compresseur pour refroidir la turbine et des moyens pour mélanger cet air de fuite du compresseur soutiré à partir de la première cavité (48) avec l'air de refroidissement provenant du compresseur, afin de refroidir la turbine.

5. Moteur à turbine à gaz suivant la revendication 2 caractérisé en ce qu'il comporte un tube antivortex (56) pour alimenter l'air provenant de l'étage médian du compresseur vers l'axe de rotation de celui-ci.

6. Moteur à turbine à gaz suivant la revendication 1 caractérisé en ce que les joints d'étanchéité (38, 50, 52) comportent des joints d'étanchéité à labyrinthe.

7. Moteur à turbine à gaz suivant la revendication 1 caractérisé en ce que les moyens pour soutirer sélectivement l'air de fuite du compresseur à partir de la première cavité (48) comportent une vanne (60) et des moyens d'actionnement pour ouvrir et fermer la vanne (60).

8. Moteur à turbine à gaz suivant l'une quelconque des revendications 1 à 7 caractérisé en ce que le moteur est du type à double corps comportant un corps à compresseur et turbine haute pression et un corps à compresseur et turbine basse pression et l'arbre (41) est l'arbre du compresseur haute pression.